(19) Europäisches Patentamt
European Patent Office
Office européen des brevets

(11) **EP 1 902 224 B1**

(12) **EUROPÄISCHE PATENTSCHRIFT**

(45) Veröffentlichungstag und Bekanntmachung des Hinweises auf die Patenterteilung:
**06.04.2011 Patentblatt 2011/14**

(21) Anmeldenummer: **06791534.8**

(22) Anmeldetag: **06.07.2006**

(51) Int Cl.:
**F16D 1/00** *(2006.01)*

(86) Internationale Anmeldenummer:
**PCT/EP2006/006621**

(87) Internationale Veröffentlichungsnummer:
**WO 2007/003443 (11.01.2007 Gazette 2007/02)**

(54) **VORGESPANNTE WELLE-NABE-VERBINDUNG MIT REALKEGEL**

PRESTRESSED SHAFT AND HUB CONNECTION HAVING A PERFECT CONE SHAPE

ASSEMBLAGE ARBRE-MOYEU AYANT UN CONE REEL

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK RS**

(30) Priorität: **06.07.2005 DE 102005031832**

(43) Veröffentlichungstag der Anmeldung:
**26.03.2008 Patentblatt 2008/13**

(73) Patentinhaber: **Neapco Europe GmbH**
**52351 Düren (DE)**

(72) Erfinder: **KROENER, Thilo**
**50169 Kerpen (DE)**

(74) Vertreter: **Kayser, Martin**
**Bauer Vorberg Kayser**
**Patentanwälte**
**Goltsteinstrasse 87**
**50968 Köln (DE)**

(56) Entgegenhaltungen:
| | |
|---|---|
| EP-A1- 1 225 356 | DE-A1- 10 109 296 |
| DE-A1- 19 522 736 | DE-A1- 19 853 411 |
| DE-U1- 9 403 483 | US-A- 1 552 343 |
| US-A- 4 043 146 | US-A- 5 215 413 |

**Beschreibung**

Die vorliegende Erfindung betrifft eine Welle-Nabe-Verbindung zur Drehmomentübertragung, mit den eine gemeinsame Längsachse aufweisenden Bauteilen:

a) eine um die Längsachse rotierbare Welle mit einem Mitnahmelängenabschnitt mit einer unrunden Außenkontur,

b) eine zu der Welle koaxiale und zumindest im Bereich des Mitnahmelängenabschnitts die Welle mit ihrer Innenkontur umschließende Nabe,

wobei

- die Außenkontur des Mitnahmelängenabschnitts der Welle und die Innenkontur der Nabe eine derartige realkeglige Form aufweisen, dass sich beim Zusammenfügen der Welle und der Nabe eine Selbsthemmung einstellt, die die Welle-Nabe-Verbindung zusammenhält, und

- ein Verbindungsmittel vorgesehen ist, welches die Welle und die Nabe im zusammengefügten Zustand in Richtung der Längsachse X-X vorspannt.

In der DE 198 53 411 A1 wird eine derartige Welle-Nabe-Verbindung beschrieben, in der das Verbindungsmittel durch ein Außengewinde mit einer dazu korrespondierenden Mutter gebildet ist, wobei sich die Mutter an einem Abschnitt an der Nabe abstützt.

Welle-Nabe-Verbindungen werden darüber hinaus im Maschinenbau in vielfältiger Weise zur Übertragung von Drehmomenten zwischen der Welle und der Nabe eingesetzt. Neben einer Vielzahl von Anforderungen ist die wesentliche Aufgabe derartiger Verbindungen meist die Übertragung hoher Drehmomente. Die Verbindungen sollen dabei möglichst kompakt und leicht sein sowie ohne umfangreiche Einstell- und Nachstellarbeiten montierbar sein. Grundsätzlich ist allen Ausführungsformen gemein, dass die Drehmomentübertragung die Welle-Nabe-Verbindung belastet. Dabei sind dynamische Belastungen meist höher als statische Belastungen.

Da es sich bei einer konventionellen Welle-Nabe-Verbindung meist nicht um eine Presspassung handelt, ist nur ein gewisser Anteil der Kontaktflächen wirklich an der Drehmomentübertragung beteiligt. Dieses verursacht hohe Spannungen in den Bauteilen, die durch eine entsprechend lange Verbindung ausgeglichen bzw. vermindert werden müssen. Die vergrößerte Länge der Verbindung verursacht aber wiederum größere Rundlauffehler und verstärkt eine Relativbewegung zwischen Welle und Nabe, während der keine Drehmomentübertragung stattfindet (das so genannte Spiel). Die Vergrößerung der Rundlauffehler führt zusätzlich zu ungewollten Geräuschen und Schwingungen. Weiterhin erleichtert eine längere Verbindung das Gleiten der Oberflächen aufeinander, wodurch wiederum die Bildung von Passungsrost gefördert wird. Schließlich führen diese Effekte zu einer Verminderung der Lebensdauer der Welle-Nabe-Verbindung und damit des gesamten Systems.

Die DE 198 36 259 A1 zeigt eine drehfeste Welle-Nabe-Verbindung, bei der die Nabe zur Verminderung bzw. zur Vermeidung des ungewollten Spiels mittels einer Radial-Presseinrichtung in Richtung auf die Drehachse derart zusammenpressbar ist, dass sich die Innenkontur der Nabe in spielfreiem Eingriff mit der Welle befindet. Nachteilig bei dieser Ausführungsform ist die Notwendigkeit zusätzlicher Bauteile, die mit höherem Platzbedarf und Kosten verbunden ist.

Bekannt zur Verminderung bzw. Vermeidung ungewollten Spiels sind außerdem Spannsatzverbindungen, bei denen zwischen der Welle und der Nabe ein Spannsatz angeordnet ist. Ein solcher Spannsatz weist mindestens ein Element auf, durch das der Ringquerschnitt des Spannsatzes vergrößert werden kann und dadurch der Spannsatz einerseits gegen die Mantelfläche der Welle und andererseits gegen die Innenfläche der Nabenbohrung gedrückt und eine spielfreie Verbindung geschaffen wird. Dementsprechend ausgestaltete Welle-Nabe-Verbindungen werden beispielsweise in der DE 101 09 296 A1, der US 5,215,413 B1, der DE 94 03 483 U1 und der DE 195 22 736 A1 beschrieben. Die DE 36 36 393 A1 beschreibt Spannsätze, bei denen der Formschluss dadurch erreicht wird, dass sowohl Welle als auch Nabe mit einer Längsverzahnung versehen sind und der Spannsatz innenseitig sowie außenseitig eine hierzu jeweils entsprechende Längsverzahnung aufweist. Auch diese Ausführungsform ist aufgrund der zusätzlichen Bauteile mit entsprechend höheren Kosten mit relativ hohem Platzbedarf verbunden. Für die Montage des Spannsatzes ist ein zusätzlicher zeit- und damit kostenintensiver Arbeitsschritt notwendig.

Die EP 1 225 356 B1 beschreibt eine Welle-Nabe Verbindung, bei der mindestens eines der Bauteile im Bereich des unrunden Mitnahmelängenabschnitts zumindest zwei um die Längsachse zueinander winkelversetzte Halteabschnitte aufweist. Dies kann beispielsweise durch Torsion erreicht werden, die sich über die gesamte Länge des Mitnahmelängenabschnitts erstreckt oder auch durch zwei nicht tordierte, über einen Verbindungsabschnitt miteinander verbundene und gegeneinander versetzte Längenabschnitte. Auch möglich sind mehrere Verbindungsabschnitte, die jeweils Längenabschnitte stufig oder kontinuierlich gegeneinander versetzen. Nachteilig ist, dass die Herstellung der Bauteile nur mit speziellen und sehr teuren Maschinen möglich ist. Insbesondere die Schaffung einer tordierten Innenkontur ist schwierig. Das Montieren oder Fügen solcher Verbindungen ist nur durch Aufbringen einer großen axialen Kraft möglich, da sich die Sektionen beim Fügen zueinander verspannen. Ein Fügen von Hand ist nicht möglich.

Auch bekannt ist die Verwendung von keilförmigen Elementen, die zwischen Welle und Nabe eingefügt werden. Diese führen jedoch zu einer Exzentrizität der Welle und damit zu punktuellen bzw. relativ kleinen Kontaktflächen zwischen Welle und Nabe. Dies wird aber oftmals in Kauf genommen, da eine Vergrößerung bzw. eine gleichmäßigere Verteilung der Kontaktflächen innerhalb des Mitnahmeabschnittes nur, wie bereits ausgeführt, mit zusätzlichen Bauteilen und erheblichem Aufwand möglich erscheint.

Ausgehend Welle-Nabe-Verbindungen der eingangs genannten Art besteht die objektive Aufgabe der Erfindung darin, eine Welle-Nabe-Verbindung mit einem Verbindungsmittel vorzusehen, bei dem die anfängliche axiale Vorspannkraft reduziert werden kann und bei der über einen weiten axialen Versatz durch Verschleiß und Setzerscheinungen noch eine ausreichende Vorspannkraft vorhanden ist.

Erfindungsgemäß wird dies durch eine gattungsgemäße Welle-Nabe-Verbindung erreicht, die dadurch gekennzeichnet ist, dass das Verbindungsmittel durch einen Vorspannring gebildet ist, der Rampen, die um die Längsachse umlaufend auf einer Außenseite der Welle und auf einer Außenseite der Nabe angeordnet sind, umgreift und somit die Welle-Nabe-Verbindung unter Vorspannung hält.

Der Erfindung liegt die Erkenntnis zugrunde, dass hohe Spannungen im Bauteil, Ermüdung, Rundlauf und Schwingungen durch eine Verringerung des Spiels zwischen Welle und Nabe nur dann zielführend vermindert oder aufgehoben werden können, wenn zum einen Selbsthemmung zwischen der Welle und der Nabe erfolgen kann, zum anderen die Verbindung dauerhaft in axialer Richtung vorgespannt bleibt.

Eine exakte Zentrizität der Welle in der Nabe gewährleistet eine gleichmäßige Drehmomentübertragung. Die Verminderung oder Aufhebung des Spiels bei zentrierter Welle führt zu einer günstigen Kraftverteilung während der DrehmomentÜbertragung und verringert dadurch Spannungen im Bauteil, Ermüdung, Rundlauf und Schwingungen. Das Zusammenfügen, insbesondere Einfädeln bzw. Einführen der Verbindung kann einfach und schnell durchgeführt werden.

Die erfindungsgemäße Welle-Nabe-Verbindung ist weiterhin sehr einfach herzustellen und zu montieren. Der Vorspannring wird bei der Montage über diese Rampen gelegt und zusammengezogen. Durch das Zusammenziehen verringert sich der Durchmesser des Vorspannringes, wodurch Seitenflanken des Vorspannringes mit den Rampen in Kontakt kommen und diese aufeinander drücken. Ist ausreichend Vorspannung erfolgt, wird der Vorspannring fixiert und verbleibt in seiner Position. Der Vorspannring ist aus einem widerstandsfähigen Material gefertigt und vorteilhafterweise ausgewuchtet.

Erfindungsgemäß weisen die Außenkontur der Welle und die Innenkontur der Nabe im Bereich des Mitnahmelängenabschnitts eine realkeglige Form auf. Dies bedeutet, dass sämtliche auf der Mantelfläche angeordnete und im Wesentlichen in Längsrichtung verlaufende Konturlinien auf einen einzigen Punkt, der auf der Längsachse angeordnet ist, hin zulaufen und sich in diesem schneiden. Anders ausgedrückt ist ein Realkegel dann gegeben, wenn eine theoretische Verlängerung aller wesentlichen Kegelwinkel die Längsachse in einem einzigen Punkt schneiden.

Dadurch, dass sowohl die Welle als auch die Nabe im Bereich des Mitnahmelängenabschnittes korrespondierende realkeglige Konturen aufweisen, ergibt sich bei entsprechend angepassten Durchmessern bzw. Querschnitten ein so genanntes positives Fitting, was zu einer flächigen Anlage und zur Selbsthemmung führt.

Die Welle und die Nabe können mit nur sehr geringem Kraftaufwand derart zusammengefügt werden, dass sie aufgrund der Selbsthemmung relativ fest in Verbindung bleiben. Durch die realkeglige Form ergibt sich außerdem, dass die Welle und die Nabe beim Zusammenfügen zwangsweise zueinander zentriert werden. Die Verbindung ist also völlig spielfrei und vermeidet alle mit einem ungewünschten Spiel verbundenen Nachteile. Die Kraftübertragung erfolgt über eine relativ große Fläche, wodurch Belastungsspitzen vermieden werden.

Als besonders vorteilhaft haben sich polygone, insbesondere trochoidische geformte Querschnitte der Welle und der Nabe erwiesen. Eine Trochoide entsteht als Bahnkurve eines Punktes, wenn dieser beim Abrollen eines Kreises (Gangkreis) auf oder in einem Kreis (Rastkreis) mitgeführt wird. Die Anzahl und Ausführung der trochoidischen "Ein- bzw. Ausbuchtungen" sind dabei variabel. Es hat sich gezeigt, dass durch den Einsatz einer optimierten trochoidischen Kontur hinsichtlich der Anzahl der "Ein- bzw. Ausbuchtungen" und deren große und kleinen Durchmessern eine Drehmomentübertragung bei minimalen Spannungen sowie gleichzeitig minimaler Relativbewegung zwischen den sich berührenden Oberflächen möglich ist. Kleine Unterschiede in der Kontur der sich berührenden Bauteile ermöglichen eine Veränderung der Eigenschaften der Welle-Nabe-Verbindung, insbesondere der Lebensdauer und Festigkeit.

Optional kann erfindungsgemäß zwischen der Welle und der Nabe ein zusätzliches Dichtungselement vorgesehen sein. Eine Abdichtung der Polygonsektion ist unter Langzeitbelastung sinnvoll, um Korrosion zu vermeiden. Auch kann eine solche Dichtung dann sinnvoll sein, wenn die Well-Nabe-Verbindung beispielsweise in Geländefahrzeugen oder Baumaschinen eingesetzt wird.

Die erfindungsgemäße Welle-Nabe-Verbindung eignet sich insbesondere für einen Einsatz in der Kraftfahrzeugtechnologie, beispielsweise für Bremssysteme, Radaufhängungen oder als Anbindungen für Gelenk und Kardanwellen von Kraftfahrzeugen. Hierbei ist von Vorteil, dass eine erfindungsgemäße Nabe mit polygoner Innenkontur beim Herstellungsprozess nicht geräumt werden muss. Eine Herstellung aus Stahl ist somit nicht notwendig, die Nabe könnte beispielsweise auch aus Gusseisen gefertigt sein. Die erfindungsgemäße Welle-Nabe-Verbindung eignet sich auch deshalb besonders für einen derartigen Einsatz, da zum Beispiel Bremssystemen hohen thermischen Belastungen ausgesetzt sind.

Weitere vorteilhafte Ausgestaltungsmerkmale der Erfindung sind in den Unteransprüchen enthalten.

Ein bevorzugte Ausführungsbeispiel soll im Folgenden die Erfindung genauer erläutert werden.

Die Welle-Nabe-Verbindung 20 weist eine Welle 22 und eine Nabe 24 auf, wobei die Welle 22 mit ihrer Außenkontur 26 an einer Innenkontur 28 der Welle 22 anliegt. Dieser Bereich, in dem ein Drehmoment übertragen werden kann, wird im Folgenden als Mitnahmelängenabschnitt bezeichnet.

Die Welle 22 und die Nabe 24 sind konzentrisch zu einer Längsachse X-X angeordnet und drehen sich bei der Drehmomentübertragung um diese.

Die Welle 22 weist trochoidische Ausbuchtungen und die Nabe 24 bezogen auf ihren Querschnitt trochoidische Einbuchtungen auf. Grundsätzlich eignen sich aber

für die Ausführung der Erfindung auch sämtliche anderen unrunden Querschnittsformen. Insbesondere hat sich ein sechsseitiges Polygon für die Übertragung des Drehmomentes als besonders geeignet herausgestellt. Dabei hat sich ebenfalls gezeigt, dass bei einem sechsseitigen Polygon eine relative Exzentrizität E zwischen 2 und 10 %, vorzugsweise etwa 3 und 5 % gegeben sein sollte. Die relative Exzentrizität E beschreibt die Exzentrizität des Polygons bezogen auf den nicht-physikalischen mittleren Durchmesser $D_m$ in Prozent, beschreibt also eine Relation zwischen einem äußeren Durchmesser $D_o$ und einem inneren Durchmesser $D_i$ des Polygons. $D_m$ ist der Durchmesser einer Kreisscheibe mit gleichem Flächeninhalt wie das Polygon. Der Begriff Polygon ist hier nicht im strengen Sinn des Wortes zu verstehen, sondern vielmehr als angenähertes, polygonähnliches Vieleck. Die relative Exzentrizität E kann nach folgender Formel errechnet werden:

$$E = \varepsilon / D_m * 100$$

mit

$$\varepsilon = \text{Unrundheit des Polygons}$$

Die relative Exzentrizität E sollte vorteilhafterweise aus folgender Formel abgeleitet werden:

$$E = (D_o - D_i / D_o + D_i) \times 50$$

Besonders vorteilhafte Polygonformen ergeben sich bei Verwendung des IPRO-TEC-Prozesses und können insbesondere nach folgenden Formeln berechnet werden (Abweichung +/- 10%):

$$x(\gamma) = (D_m/2) \times \cos(\gamma) + \varepsilon \times \cos((n-1) \times \gamma)$$

$$y(\gamma) = (D_m/2) \times \sin(\gamma) - \varepsilon \times \sin((n-1) \times \gamma)$$

mit

y = 0 bis 360°, durchlaufender Parameter

n = Anzahl der Seiten des Polygons

ε = Unrundheit des Polygons

Die Welle 22 ist in die Nabe 24 einführbar . Die Außenkontur 26 und die Innenkontur 28 sind realkeglig ausgeführt. Dies bedeutet, dass die relative Exzentrizität E über die Länge des Mitnahmelängenabschnittes konstant ist. der Mitnahmelängenabschnitt ist in Richtung der Längsachse X-X sehr kurz. Es hat sich gezeigt, dass eine Verkürzung des Mitnahmelängenabschnittes um bis zu 60% bei vergleichbaren zu übertragenden Drehmomenten gegenüber konventionellen Verbindungen möglich ist. Durch diese Reduzierung werden zum einen die Herstellungskosten verringert, zum anderen verringert sich auch die Baugröße der Welle-Nabe-Verbindung 20. Auch werden Vibrationen und ungewollter Passungsrost minimiert. Die minimale mögliche Länge des Mitnahmelängenabschnittes ist diejenige Länge, die es erlaubt, die gewünschten Drehmomente sicher zu übertragen.

Die Länge des Mitnahmelängenabschnitts beträgt vorteilhafterweise nur bis zu 40 %, insbesondere nur bis zu 33 % des mittleren Kegeldurchmessers des Querschnitts des unrunden Mitnahmelängenabschnitts. Grundsätzlich sind aber je nach Ausführungsform der Verbindung auch andere Längenverhältnisse möglich.

Zwei erfindungsgemäße umlaufende Rampen 30 sind jeweils an der Welle 22 und der Nabe 24 vorgesehen und sich koaxial um die Längsachse X-X erstrecken. Die Rampen 30 weisen im gezeigten Ausführungsbeispiel jeweils eine Abschrägung 32 auf, die in die von der Welle-Nabe-Verbindung 20 wegweisende Richtung aufeinander zulaufen. Die Rampen 30 mit den Abschrägungen 32 dienen der Anlage des in Figur 4 gezeigten Verbindungsmittels, das im gezeigten Ausführungsbeispiel als Vorspannring 34 ausgeführt ist.

Um eine ausreichende Vorspannung aufzubringen, wird der Vorspannring 34 nach dem Zusammenfügen der Welle 22 und der Nabe 24 über die Rampen 30 gelegt und kommt mit seiner Innenseite mit den Abschrägungen 32 in Kontakt. Durch Reduzieren des Durchmessers des Vorspannringes 34 drückt dieser gegen die Abschrägungen 32 und treibt die Rampen 30 aufeinander zu.

. Die Reduzierung des Durchmessers des Vorspannringes kann durch ein so genanntes Ohr 36 erfolgen, das mit Hilfe eines geeigneten Werkzeuges zusammengedrückt wird. Dieses Verfahren ist schnell und einfach durchzuführen und führt zu einer sehr gleichmäßigen und konstanten Vorspannkraft über den gesamten Umfang der Rampen 30. Trotzdem sind auch andere Möglichkeiten, beispielsweise Verbindungsmittel, die mit Hilfe von Schrauben zusammengefügt werden, möglich. Es hat sich gezeigt, dass das Verbindungsmittel ausgewuchtet sein sollte, da sich dieses bei der Drehmomentübertragung mitdreht. Für. Anwendungsfälle mit geringen Drehzahlen kann jedoch auf das Auswuchten verzichtet werden. Die Innenseite des Vorspannringes 34 weist ein Profil auf, das derart an die Rampen 30 bzw. die Abschrägungen 32 angepasst ist, dass eine Reduzierung des Durchmessers dazu führt, dass eine Vorspannkraft auf die Abschrägungen 32 wirkt. Das Verbindungsmittel erzeugt ausreichend Vorspannkraft, um die Welle-Nabe-Verbindung 20 im selbsthemmenden Zustand zu halten. Im vorliegenden Ausführungsbeispiel weist der Vorspannring 34 Seitenwände 38 auf, deren Innenseiten jeweils mit den Abschrägungen 32 in Kontakt kommen. Die Seitenwände 38 können durchgängig ausgeführt sein, sie können jedoch auch durch Einbuchtungen 39 unterbrochen sein, so dass mehrere Sei-tenwandabschnitte 40 ausgebildet sind. Wesentlich ist, dass die Seitenwände 38 derart ausgeführt sind, dass die durch sie aufgebrachte Kraft in axialer Richtung möglichst gleichmäßig über den Umfang der Rampen 30 wirkt. Im gezeigten Ausführungsbeispiel sind je Seite vier Seitenwandabschnitte 40 gezeigt, möglich sind aber auch bis zu zwanzig Seitenwandabschnitte.

Der Vorspannring 34 weist zwei freie Enden auf. Ausgehend von den freien Enden ergibt sich ein Überlagerungsabschnitts 50, über den sich Endbereiche des Vorspannrings 34 im geschlossenen Zustand überlagern. Der Überlagerungsabschnitts 50 weist eine Länge von etwa 10 bis 20 % des Außenumfangs des Vorspannrings 34 auf und ist durch die freien Enden begrenzt. Im Bereich des Überlagerungsabschnitts 50 weisen beide Endbereiche jeweils einen Haken 52 und eine Öffnung 54 auf, die derart angeordnet sind, dass die beiden Haken 52 in die jeweils korrespondierende Öffnung 54 des anderen Endbereiches einhakbar sind. Wird das Ohr 36 gekrimpt bzw. zusammengedrückt, ziehen die Haken 52 den Vorspannring 34 über die Anlage 54 zusammen.

Ein wesentlicher Vorteil der Erfindung besteht auch darin, dass die gleichen oder unterschiedlichen Materialien für die Herstellung der Welle 22 und/oder der Nabe 24 verwendet werden können. Beispielsweise kann die Nabe 24 aus Gusseisen gefertigt sein, während die Welle 22 aus Stahl gefertigt ist. Weitere Materialarten, die für eine Fertigung geeignet sind, wären beispielsweise Keramik, Aluminium, MMC sowie globolares oder laminares Gusseisen. Auch Kombinationen der verschiedenen Materialarten sind möglich.

Verlaufen- de Konturlinien der Außenkontur 26 schneiden sich etwa in Längsrichtung X-X dann, wenn sie theoretisch verlängert werden in einem einzigen Punkt auf der Längsachse X-X. Es ist ein Kegelwinkel A, der durch die Längsachse X-X und eine an einen maximalen Durchmesser der Welle 22 angelegte Linie eingeschlossen ist, und ein Kegelwinkel B, der durch die Längsachse X-X und eine an einen minimalen Durchmesser der Welle 22 angelegte Linie angeschlossen ist, gezeigt. Der Kegelwinkel A kann auch als äußerer Kegelwinkel A bezeichnet werden, der Kegelwinkel B auch als innerer Kegelwinkel B. Es hat sich gezeigt, dass ein äußerer Kegelwinkel zwischen 0,5° und 7° die erwünschte Selbsthemmung sicher ermöglicht. Ist die Innenkontur 28 der Welle 22 entsprechend ausgeführt, ergibt sich beim Zusammenfügen der Welle 22 und der Nabe 24 ein flächiger Kontakt, der eine optimale Drehmomentübertragung ermöglicht. Wesentlich ist dabei aber auch, dass beim Zusammenfügen der Zustand der Selbsthemmung erreicht wird, nämlich dann, wenn die Außenkontur 26 an der Innenkontur zur Anlage kommt.

Eine bevorzugter Einsatzbereich der Welle-Nabe-Verbindung 20 ist als Verbindung einer Abtriebswelle 42 mit einem Gleichlaufgelenk 44. Die Welle-Nabe-Verbindung 20 kann dazu beispielsweise auch mit einem Gleichlauf Verschiebegelenk integriert sein. Die Abtriebswelle weist hier im Endbereich mit Splines 48 zur Drehmomentübertragung auf.

Die Seitenwände 38 weisen vorzugsweise einen Winkel zwischen 20° und 28° auf, wobei der Winkel die Abweichung von einer lotrechten auf die Lenkachse X-X bezeichnet. Obwohl sich dieser Winkelbereich als vorteilhaft erwiesen hat, sind je nach Anwendungsbereich auch andere Winkel möglich.

Die Vorspannung wird durch den Vorspannring 34 dadurch erzeugt, dass sich die Seitenwände 38 oder die Seitenwandabschnitte 40 elastisch verformen. Um eine ausreichend gute Verformung der Seitenwände 38 sicherzustellen, sollten die Seitenwände 38 oder die Seitenwandabschnitte 40 ein geringeren Winkel als die Abschrägungen 32 aufweisen. Es hat sich ergeben, dass ein Winkel von 14° bis 22° in Verbindung mit den oben genannten Winkeln für die Abschrägungen 32 sehr gut funktioniert.

Zur Vereinfachung der Montage ist der Vorspannring 34 in einem Vormontagezustand geöffnet ausgeführt, wobei sich die freien Enden des der Vorspannring 34 bereichsweise überlappen. In dem überlappenden Bereich ist im Bereich des einen freien Endes eine Ausnehmung angeordnet, in die ein Haken, der im Bereich des andern freien Endes angeordnet ist, einhakbar ist. Das Ohr 36 geht über zwei Schenkel in den normalen Umfang des Vorspannringes 24 über und weist dadurch in etwa die Form eines Omegas auf. Nach dem Einhaken und dem plastischen Umformen des Ohres 36 reduziert sich der Durchmesser des Vorspannringes, so dass die Schenkel des Ohres 36 aufeinander zu gedrückt werden und die Seitenwände sich an der Rampe 30 elastisch verformen, und die Welle 22 und die Nabe 24 unter Vorspannung zusammenhalten.

Die Verwendung eines Ohres 36 ist sehr kostengünstig und erlaubt ein einfaches und schnelles Festziehen der Verbindung. Anstelle eines Ohres 36 sind aber natürlich auch andere Vorrichtungen, beispielsweise ein Kniehebel, Schraubverbindungen oder ähnliches, denkbar.

Der Vorspannring 34 ist in der Lage, einen Spaltabstand zwischen den beiden Rampen 30 der Welle 22 und der Nabe 24 abzudecken und trotzdem ausreichend Vorspannung zu erzeugen.

Der Vorspannring 34 kann vorteilhafterweise bereits vor dem Zusammenfügen der Welle-Nabe-Verbindung 20 mit der Welle 22 oder Nabe 24 verbunden sein. Dadurch wird der Zusammenbau nochmals deutlich vereinfacht.

Zwischen der Welle 22 und der Nabe 24 ist im gezeigten Ausführungsbeispiel ein zusätzliches Dichtungselement 46, ausgeführt als O-Ring, angeordnet.

Die vorangegangene Beschreibung dient lediglich dem Verständnis der Erfindung und ist nicht einschränkend zu verstehen. Vielmehr stellt das beschriebene Ausführungsbeispiel lediglich eine sehr vorteilhafte Umsetzung der Erfindung dar.

### Patentansprüche

1. Welle-Nabe-Verbindung (20) zur Drehmomentübertragung, mit den eine gemeinsame Längsachse (X-X) aufweisenden Bauteilen:

   a) eine um die Längsachse (X-X) rotierbare Welle (22) mit einem Mitnahmelängenabschnitt mit einer unrunden Außenkontur (26),
   b) eine zu der Welle (22) koaxiale und zumindest im Bereich des Mitnahmelängenabschnitts die Welle (22) mit ihrer Innenkontur (28) umschließende Nabe (24),

   wobei

   - die Außenkontur (26) des Mitnahmelängenabschnitts der Welle (22) und die Innenkontur (28) der Nabe (24) eine derartige realkeglige Form aufweisen, dass sich beim Zusammenfügen der Welle (22) und der Nabe (24) eine Selbsthemmung einstellt, die die Welle-Nabe-Verbindung (20) zusammenhält, und
   - ein Verbindungsmittel vorgesehen ist, welches die Welle (22) und die Nabe (24) im zusammengefügten Zustand in Richtung der Längsachse (X-X) vorspannt,

   **dadurch gekennzeichnet, dass** das Verbindungsmittel durch einen Vorspannring (34) gebildet ist, der Rampen (30), die um die Längsachse (X-X) umlaufend auf einer Außenseite der Welle (22) und auf einer Außenseite der Nabe (24) angeordnet sind, umgreift und somit die Welle-Nabe-Verbindung (20) unter Vorspannung hält.

2. Welle-Nabe-Verbindung (20) nach Anspruch 1, **dadurch gekennzeichnet, dass** die Außenkontur (26) und die Innenkontur (28) eine polygonale Form aufweisen.

**3.** Welle-Nabe-Verbindung (20) nach Anspruch 1 oder 2, **dadurch gekennzeichnet, dass** die Außenkontur (26) der Welle (22) im Bereich des Mitnahmelängenabschnitts einen äußeren Kegelwinkel (A) von 0,5 bis 7° aufweist.

**4.** Welle-Nabe-Verbindung (20) nach einem der Ansprüche 1 bis 3, **dadurch gekennzeichnet, dass** die axiale Länge des Mitnahmelängenabschnitts bis zu 40% des mittleren Kegeldurchmessers des Querschnitts des unrunden Mitnahmelängenabschnitts beträgt.

**5.** Welle-Nabe-Verbindung (20) nach einem der Ansprüche 2 bis 4, **dadurch gekennzeichnet, dass** die Welle (22) eine sechsseitige Außenkontur (26) und die Nabe (24) eine sechsseitige Innenkontur (28) aufweist, wobei die relative Exzentrizität E zwischen 3 und 5 % beträgt und sich nach der Formel $E = (D_o - D/D_o - D_i) \times 50$ berechnet.

**6.** Welle-Nabe-Verbindung nach einem der Ansprüche 2 bis 5, **dadurch gekennzeichnet, dass** sich die Polygon konturen mit folgenden Formeln bestimmen lassen:

$$x\,(\gamma) = (D_m/2) \times \cos\,(\gamma) + E \times \cos\,((n\text{-}1) \times \gamma)$$

$$y\,(\gamma) = (D_m/2) \times \sin\,(\gamma) - e \times \sin\,((n\text{-}1) \times \gamma).$$

**7.** Welle-Nabe-Verbindung (20) nach Anspruch 6, **dadurch gekennzeichnet, dass** die Rampen (30) jeweils eine Abschrägung (32) aufweisen, die in die von der Welle-Nabe-Verbindung (20) wegweisende Richtung aufeinander zulaufen und mit einer Innenseite von Seitenwänden (38) des Vorspannrings (34) zusammenwirken.

**8.** Welle-Nabe-Verbindung (20) nach Anspruch 7, **dadurch gekennzeichnet, dass** die Abschrägungen (32) der Rampen (30) einen Winkel von 20 bis 28° und die Seitenwände (38) einen Winkel von 14 bis 22° jeweils mit einer Lotrechten auf die Längsachse (X-X) einschließen.

**9.** Welle-Nabe-Verbindung (20) nach einem der Ansprüche 1 bis 8, **dadurch gekennzeichnet, dass** der Vorspannring (34) in seinem Umfang ein nach außen abstehendes Ohr (26) nach Art eines Omegas aufweist, über das durch Zusammendrücken von Schenkeln des Omegas der Durchmesser des Vorspannringes (34) reduzierbar ist.

**10.** Welle-Nabe-Verbindung (20) nach einem der Ansprüche 1 bis 9, **dadurch gekennzeichnet, dass** der Vorspannring (34) für schnell drehende Verbindungen ausgewuchtet ausgeführt ist.

**Claims**

**1.** A shaft-hub connection (20) for torque transmission, with the following components having a common longitudinal axis (X-X):

    a) a shaft (22) rotatable about said longitudinal axis (X-X), with a driver length having an outer contour (26) with a shape out of round,
    b) a hub (24), which is coaxial with the shaft (22) and enclosing the shaft (22) with its inner contour (28) at least in the region of the driver length,

wherein

    - said outer contour (26) of the driver length of the shaft (22) and said inner contour (28) of the hub (24) comprise such a real conical shape that self-locking occurs during assembly of shaft (22) and hub (24), said self-locking keeping the shaft-hub connection (20) together, and
    - there is provided a connection means which pretensions the shaft (22) and the hub (24) in the assembled condition in the direction of the longitudinal axis (X-X),

**characterized in that** the connection means is formed by a pretension ring (34) which forms a surrounding grip about ramps (30) which are peripherally disposed around the longitudinal axis (X-X) on one outer side of said shaft (22) and on one outer side of said hub (24), thus keeping the shaft-hub connection (20) pretensioned.

2. The shaft-hub connection (20) as set forth in claim 1, **characterized in that** the outer contour (26) and the inner contour (28) have a polygonal shape.

3. The shaft-hub connection (20) as set forth in claim 1 or 2, **characterized in that** the outer contour (26) of the shaft (22) has an outer conical angle (A) ranging from 0.5 to 7° in the region of the driver length.

4. The shaft-hub connection (20) as set forth in any one of the claims 1 through 3, **characterized in that** the axial length of the driver length is up to 40 % of the central cone diameter of the cross section of the driver length having an out of round shape.

5. The shaft-hub connection (20) as set forth in any one of the claims 2 through 4, **characterized in that** the shaft (22) has a hexagonal outer contour (26) and that the hub (24) has a hexagonal inner contour (28), the relative eccentricity E ranging between 3 and 5 % and being calculated according to the formula $E = (Do - D/D_o - D_i) \times 50$.

6. The shaft-hub connection as set forth in any one of the claims 2 through 5, **characterized in that** the polygon contours can be determined using the following formulae:

$$x\,(\gamma) = (D_m/2) \times \cos(\gamma) + E \times \cos((n-1) \times \gamma)$$

$$y\,(\gamma) = (D_m/2) \times \sin(\gamma) - e \times \sin((n-1) \times \gamma).$$

7. The shaft-hub connection (20) as set forth in claim 6, **characterized in that** the ramps (30) comprise one chamfer (32) each, said chamfers tapering in the direction leading away from the shaft-hub connection (20) and cooperating with one inner side of side walls (38) of the pretension ring (34).

8. The shaft-hub connection (20) as set forth in claim 7, **characterized in that** the chamfers (32) of the ramps (30) include an angle ranging from 20 to 28° and that the side walls (38) include an angle ranging from 14 to 22°, each having one side perpendicular to the longitudinal axis (X-X).

9. The shaft-hub connection (20) as set forth in any one of the claims 1 through 8, **characterized in that** the pretension ring (34) has an outward protruding omega-shaped ear (26) in its periphery through which the diameter of the pretension ring (34) can be reduced by pressing together branches of the omega.

10. The shaft-hub connection (20) as set forth in any one of the claims 1 through 9, **characterized in that** the pretension ring (34) is implemented so as to be balanced for fast rotating connections.

**Revendications**

1. Assemblage arbre-moyeu (20) pour la transmission de couple, comprenant les composants présentant un axe longitudinal (X-X) commun :

   a) un arbre (22) apte à tourner autour de l'axe longitudinal (X-X) et ayant une portion longitudinale d'entraînement à contour extérieur non rond (26),
   b) un moyeu (24) coaxial par rapport à l'arbre (22) et entourant, par son contour intérieur (28), ledit arbre (22) au moins au niveau de ladite portion longitudinale d'entraînement,

   - ledit contour extérieur (26) de la portion longitudinale d'entraînement de l'arbre (22) et ledit contour intérieur (28) du moyeu (24) présentant une telle forme réelle conique que, lors de l'assemblage de l'arbre (22) et du moyeu (24), il y aura un blocage automatique qui tient ensemble ledit assemblage arbre-moyeu (20), et

- un moyen de jonction étant prévu qui précontraint ledit arbre (22) et ledit moyeu (24) en état assemblé dans la direction de l'axe longitudinal (X-X),

**caractérisé par le fait que** ledit moyen de jonction est formé par une bague de précontrainte (34) qui s'engage autour de rampes (30) lesquelles sont disposées circonférentiellement autour de l'axe longitudinal (X-X) sur une face extérieure de l'arbre (22) et sur une face extérieure du moyeu (24), et maintient ainsi sous précontrainte ledit assemblage arbre-moyeu (20).

2. Assemblage arbre-moyeu (20) selon la revendication 1, **caractérisé par le fait que** le contour extérieur (26) et le contour intérieur (28) présentent une forme polygonale.

3. Assemblage arbre-moyeu (20) selon la revendication 1 ou 2, **caractérisé par le fait que** le contour extérieur (26) de l'arbre (22) présente, au niveau de ladite portion longitudinale d'entraînement, un angle extérieur de cône (A) compris entre 0,5 et 7°.

4. Assemblage arbre-moyeu (20) selon l'une quelconque des revendications 1 à 3, **caractérisé par le fait que** la longueur axiale de la portion longitudinale d'entraînement fait jusqu'à 40 % du diamètre moyen de cône de la section transversale de la portion longitudinale d'entraînement non ronde.

5. Assemblage arbre-moyeu (20) selon l'une quelconque des revendications 2 à 4, **caractérisé par le fait que** ledit arbre (22) présente un contour extérieur (26) à six faces et ledit moyeu (24) présente un contour intérieur (28) à six faces, l'excentricité relative E étant comprise entre 3 et 5 % et se calculant suivant la formule $E = (Do - D/D_o - D_i) \times 50$.

6. Assemblage arbre-moyeu selon l'une quelconque des revendications 2 à 5, **caractérisé par le fait que** les contours polygonaux peuvent être déterminés par les formules suivantes :

$$\dot{x}\,(\gamma) = (D_m/2) \times \cos\,(\gamma) + E \times \cos\,((n-1) \times \gamma)$$

$$y\,(\gamma) = (D_m/2) \times \sin\,(\gamma) - e \times \sin\,((n-1) \times \gamma).$$

7. Assemblage arbre-moyeu (20) selon la revendication 6, **caractérisé par le fait que** lesdites rampes (30) présentent chacune un biseau (32) qui s'étendent les uns vers les autres dans la direction opposée à l'assemblage arbre-moyeu (20) et qui agissent de concert avec une face intérieure de parois latérales (38) de ladite bague de précontrainte (34).

8. Assemblage arbre-moyeu (20) selon la revendication 7, **caractérisé par le fait que** lesdits biseaux (32) des rampes (30) forment un angle compris entre 20 et 28° et les parois latérales (38) forment un angle compris entre 14 et 22° respectivement avec une perpendiculaire à l'axe longitudinal (X-X).

9. Assemblage arbre-moyeu (20) selon l'une quelconque des revendications 1 à 8, **caractérisé par le fait que** ladite bague de précontrainte (34) présente, dans sa circonférence, une oreille (26) faisant saillie vers l'extérieur, à la manière d'une oméga par laquelle, en comprimant des branches de l'oméga, le diamètre de ladite bague de précontrainte (34) peut être réduit.

10. Assemblage arbre-moyeu (20) selon l'une quelconque des revendications 1 à 9, **caractérisé par le fait que**, pour des assemblages à rotation rapide, ladite bague de précontrainte (34) est conçue de manière à être équilibrée.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19853411 A1
- DE 19836259 A1
- DE 10109296 A1
- US 5215413 B1
- DE 9403483 U1
- DE 19522736 A1
- DE 3636393 A1
- EP 1225356 B1